(19) Europäisches Patentamt
European Patent Office
Office européen des brevets

(11) **EP 4 131 460 A1**

(12) **EUROPEAN PATENT APPLICATION**
published in accordance with Art. 153(4) EPC

(43) Date of publication:
**08.02.2023 Bulletin 2023/06**

(21) Application number: **20928766.3**

(22) Date of filing: **02.04.2020**

(51) International Patent Classification (IPC):
**H01M 4/13** (2010.01)

(52) Cooperative Patent Classification (CPC):
**H01M 4/13; Y02E 60/10**

(86) International application number:
**PCT/CN2020/082932**

(87) International publication number:
**WO 2021/196116 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Ningde Amperex Technology Limited**
  **Ningde, Fujian 352100 (CN)**

• **Dongguan Amperex Technology Limited**
  **Dongguan, Guangdong 523808 (CN)**

(72) Inventor: **LI, Baozhang**
  **Ningde, Fujian 352100 (CN)**

(74) Representative: **Icosa**
  **83 avenue Denfert-Rochereau**
  **75014 Paris (FR)**

(54) **ELECTRODE SHEET, AND ELECTROCHEMICAL DEVICE AND ELECTRONIC DEVICE COMPRISING SAME**

(57) This application relates to an electrode plate, an electrochemical apparatus, and an electronic apparatus containing the same. The electrode plate includes a current collector, a first active substance layer, a second active substance layer, and an insulation layer. The current collector includes a first surface, the first active substance layer includes a first active substance, and the second active substance layer includes a second active substance. The first active substance layer is sandwiched between the current collector and the second active substance layer and covers a first portion of a first surface of the current collector, the insulation layer covers a second portion of the first surface of the current collector that is different from the first portion, and in a length direction of the electrode plate, the first active substance layer includes a first end and a second end, the insulation layer includes a third end and a fourth end, and the first end and the third end are stacked to form an overlapped portion. The current collector of the electrode plate can be covered by a high-resistance layer, improving safety performance of the electrochemical apparatus and the electronic apparatus.

FIG. 1

**Description**

**TECHNICAL FIELD**

This application relates to the technical field of energy storage, and in particular, to an electrode plate, an electrochemical apparatus, and an electronic apparatus containing the electrochemical apparatus.

**BACKGROUND**

Electrochemical apparatuses (for example, lithium-ion batteries) have been widely used in people's daily life with advancement of technologies and improvement of environmental protection requirements. With popularization of lithium-ion batteries, user terminals occasionally encounter safety issues caused by the lithium-ion batteries being pierced under external force, and safety performance of the lithium-ion batteries has become a growing concern. Especially, fallout of some mobile phone explosion events make users, after-sales service providers, and lithium-ion battery manufacturers raise new requirements for the safety performance of the lithium-ion batteries.

In existing methods, safety performance of a lithium-ion battery is improved by increasing, for example, concentration of a binder in a positive electrode active substance layer and thickness of a ceramic coating layer on a surface of a separator. All such methods are performed at the expense of energy density of the lithium-ion battery. Therefore, there is an urgent need to provide a technical solution that can significantly improve safety performance of lithium-ion batteries under the condition of high energy density.

**SUMMARY**

This application provides an electrode plate, an electrochemical apparatus, and an electronic apparatus containing the electrochemical apparatus, to resolve at least one problem in the related field to at least some extent.

According to an aspect of this application, some embodiments of this application provide an electrode plate, where the electrode plate includes a current collector, a first active substance layer, a second active substance layer, and an insulation layer. The current collector includes a first surface, the first active substance layer includes a first active substance, and the second active substance layer includes a second active substance. The first active substance layer is sandwiched between the current collector and the second active substance layer and covers a first portion of a first surface of the current collector, the insulation layer covers a second portion of the first surface of the current collector that is different from the first portion, and in a length direction of the electrode plate, the first active substance layer includes a first end and a second end, the insulation layer includes a third end and a fourth end, and the first end and the third end are stacked to form an overlapped portion.

According to an aspect of this application, some embodiments of this application provide an electrochemical apparatus, where the electrochemical apparatus includes a positive electrode plate, a separator, and a negative electrode plate, and the positive electrode plate and/or the negative electrode plate is the foregoing electrode plate.

According to another aspect of this application, some embodiments of this application provide an electronic apparatus, including the foregoing electrochemical apparatus.

The electrochemical apparatus in this application uses the electrode plate with a dual active substance layer structure, the insulation layer is arranged on a current collector uncoated portion not covered by the active substance layer, and the current collector is completely covered by stacking the insulation layer and the first active substance layer, so as to prevent short circuit between the electrode plates when the electrochemical apparatus is impacted or punctured under external force, thereby improving the safety performance of the electrochemical apparatus and the electronic apparatus.

Additional aspects and other advantages of the embodiments of this application are partly described and presented in subsequent descriptions, or explained by implementation of the embodiments of this application.

**BRIEF DESCRIPTION OF DRAWINGS**

To describe embodiments of this application, the following briefly describes the accompanying drawings required for describing the embodiments of this application or the prior art. Apparently, the accompanying drawings described below are merely some embodiments of this application. A person skilled in the art may still derive drawings for other embodiments from structures shown in these accompanying drawings without creative efforts.

FIG. 1 is a schematic structural diagram of an electrode plate whose first active substance layer is covered with an insulation layer according to an embodiment of this application.

FIG. 2 is a schematic structural diagram of an electrode plate whose first active substance layer is covered with an insulation layer according to an embodiment of this application (a second active substance layer is flush with an edge of a current collector in a length direction).

FIG. 3 is a schematic structural diagram of an electrode plate whose first active substance layer is covered with an insulation layer according to an embodiment of this application (a second active substance layer partially covers an overlapped portion).

FIG. 4 is a schematic structural diagram of an electrode plate whose insulation layer is covered with a first active substance layer according to an embodiment of this application.

FIG. 5 is a schematic structural diagram of an electrode plate whose insulation layer is covered with a first active substance layer according to an embodiment of this application (a second active substance layer is flush with an edge of a current collector in a length direction).

FIG. 6 is a schematic structural diagram of an electrode plate whose insulation layer is covered with a first active substance layer according to an embodiment of this application (a second active substance layer partially covers an overlapped portion).

FIG. 7 is a schematic structural diagram of an electrode plate according to an embodiment of this application (structure of an active substance layer on a second surface of a current collector).

FIG. 8 is a schematic structural diagram of a positive electrode plate according to Example 1.

FIG. 9 is a schematic structural diagram of a positive electrode plate according to Example 7.

FIG. 10 is a schematic structural diagram of a positive electrode plate according to Example 8.

FIG. 11 is a schematic structural diagram of a positive electrode plate according to Example 9.

FIG. 12 is a schematic structural diagram of a positive electrode plate according to Example 11.

FIG. 13 is a schematic structural diagram of a positive electrode plate according to Example 12.

FIG. 14 is a schematic structural diagram of a positive electrode plate according to Example 13.

## DESCRIPTION OF EMBODIMENTS

Embodiments of this application are described in detail below. Same or similar components and components with same or similar functions are denoted with similar reference signs throughout this specification of this application. Embodiments in related accompanying drawings described herein are descriptive and illustrative, and are used to provide a basic understanding of this application. The embodiments of this application should not be construed as a limitation on this application.

In this specification, unless otherwise specified or limited, relative terms such as "central", "longitudinal", "lateral", "front", "rear", "right", "left", "inner", "outer", "lower", "higher", "horizontal", "vertical", "above", "below", "upper", "lower", "top", "bottom", and their derivatives (for example, "horizontally", "downwardly", and "upwardly") should be construed as citation of a direction described in discussion or depicted in the accompanying drawings. These relative terms are only used for ease of description, and do not require the construction or operation of this application in a specific direction.

In addition, quantities, ratios, and other values are sometimes presented in the format of ranges in this specification. It should be understood that such range formats are used for convenience and simplicity and should be flexibly understood as including not only values clearly designated as falling within the range but also all individual values or sub-ranges covered by the range as if each value and sub-range were clearly designated.

Further, for ease of description, "first", "second", "third", and the like may be used herein to distinguish between different components in a figure or a series of figures. Unless otherwise specified or limited, "first", "second", "third", and the like are not intended to describe corresponding components.

In an electrochemical apparatus (such as a lithium-ion battery), when impacted or punctured under external force, four short-circuit modes usually occur: positive electrode active substance layer-negative electrode active substance layer, positive electrode active substance layer-negative electrode current collector, positive electrode current collector-negative electrode current collector, and positive electrode current collector-negative electrode active substance layer. Among such four short-circuit modes, the short-circuit modes of positive electrode current collector-negative electrode active substance layer and negative electrode current collector-positive electrode active substance layer are the most dangerous, because short-circuit power is large in these two short-circuit modes.

An embodiment of this application provides an electrode plate with a dual active substance layer structure, with a first active substance layer disposed on a portion of the electrode plate covered by the active substance layer on the current collector, a second active substance layer covering the first active substance layer, and one insulation layer disposed on a current collector uncoated portion not covered by the first active substance layer. In the electrode plate, a combination manner of the first active substance layer and the insulation layer is adjusted to form an overlapped portion, so that resistance of a surface of the current collector can be effectively increased when the electrode plate is damaged under external force, thereby improving safety performance of the electrochemical apparatus in a corresponding test (nail penetration or heavy impact).

The electrochemical apparatus includes a positive electrode plate, a negative electrode plate, a separator, an electrolyte solution, and the like. The positive electrode plate and the negative electrode plate both include a current collector, an active substance layer, and the like. In addition to a portion covered by the active substance layer, the current collector also includes a portion not covered by the active substance layer (also referred to as a current collector uncoated portion). For example, when an electrode assembly of the electrochemical apparatus is of a wound type, the current collector uncoated portion of the electrode assembly includes an outer portion of the electrode assembly and an inner tab welded portion of the electrode assembly.

In a portion covered by the active substance layer, the dual active substance layer structure may be used to arrange a first active substance layer at a position close to the current collector, and arrange a second active substance layer at a position far away from the surface of the current collector. Compared with the first active substance layer, the second active substance layer may have higher energy density. When being impacted or punctured, the first active substance layer can increase contact resistance between the current collector and another object in contact with the current collector, thereby protecting the current collector. However, during a nail penetration test, the current collector uncoated portion on the current collector may also directly come into contact with a nail, possibly causing short circuit. For example, the positive electrode current collector can be conductively connected to the negative electrode active substance layer through the nail, thereby forming a short-circuit mode of positive electrode current collector-negative electrode active substance layer or positive electrode current collector-nail-negative electrode active substance layer. Therefore, one insulation layer can be arranged on the current collector uncoated zone to effectively protect the current collector in the electrode plate, further preventing the short-circuit mode of positive electrode current collector-negative electrode active substance layer or negative electrode current collector-positive electrode active substance layer. When more area of the current collector uncoated portion is covered by the insulation layer, the effect of preventing short circuit is better. In the overlapped portion of the electrode plate in this application, the insulation layer and the first active substance layer are stacked to cover each other, so that the current collector at a junction of the insulation layer and the first active substance layer is not exposed, thereby ensuring the coverage of the insulation layer on the current collector and improving the safety performance of the electrode plate.

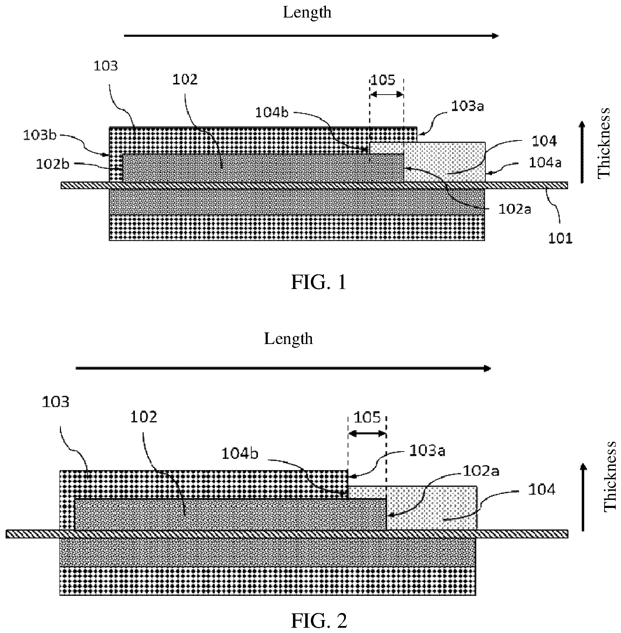

FIG. 1 to FIG. 3 are schematic structural diagrams of electrode plates according to some embodiments of this application. In an overlapped portion of the electrode plate, an insulation layer covers a first active substance layer. The electrode plate may be a positive electrode plate or a negative electrode plate. As shown in FIG. 1 to FIG. 3, the electrode plate includes a current collector 101, a first active substance layer 102, a second active substance layer 103, and an insulation layer 104. The first active substance layer 102 is sandwiched between the current collector 101 and the second active substance layer 103 and covers a first portion of a surface of the current collector 101, the insulation layer 104 covers a second portion of a first surface of the current collector 101 that is different from the first portion, and in a length direction of the electrode plate, the first active substance layer 102 includes a first end 102a and a second end 102b, the insulation layer 104 includes a third end 104b and a fourth end 104a, and the first end 102a and the third end 104b are stacked to form an overlapped portion 105. No gap is present between the insulation layer 104 and the first active substance layer 102 in the length direction of the electrode plate, so that the current collector 101 is not easily exposed when being impacted or punctured under external force.

In some embodiments, a distance in the length direction of the electrode plate between an edge of the first end 102a of the first active substance layer 102 in the length direction of the electrode plate and an edge of the third end 104b of the insulation layer 104 in the length direction of the electrode plate is less than or equal to 20 mm. That is, a length of the overlapped portion 105 of the first active substance layer 102 and the insulation layer 104 in the length direction of the electrode plate is less than or equal to 20 mm. In some embodiments, the length of the overlapped portion 105 of the first active substance layer 102 and the insulation layer 104 in the length direction of the electrode plate is 5.0 mm to 20 mm. In some other embodiments, the length of the overlapped portion 105 of the first active substance layer 102 and the insulation layer 104 in the length direction of the electrode plate is approximately, for example, 0.5 mm, 1.0 mm, 2.5 mm, 5.0 mm, 10.0 mm, 15.0 mm, 20.0 mm, or is in a range defined by any two of these values.

In some embodiments, as shown in FIG. 1 to FIG. 3, the first end 102a is sandwiched between the third end 104b and the current collector 101 in a thickness direction of the electrode plate. The process tolerance requirement is low for covering the first end 102a of the first active substance layer 102 with the third end 104b of the insulation layer 104 in the overlapped portion 105, which can reduce time and cost required for preparation.

In some embodiments, the second active substance layer includes a fifth end 103a in the length direction of the electrode plate, and the fifth end 103a is close to the overlapped portion 105. As shown in FIG. 1, the second active substance layer 103 may extend from the overlapped portion 105 in the length direction of the electrode plate and cover a portion of the insulation layer 104, so that an edge of the first end 102a of the first active substance layer 102 in the length direction of the electrode plate is sandwiched between an edge of the third end 104b in the length direction of the electrode plate and an edge of the fifth end 103a in the length direction of the electrode plate.

In some embodiments, in the length direction of the electrode plate, a distance between an edge of the first end 102a of the first active substance layer 102 in the length direction of the electrode plate and an edge of the fifth end 103a of the second active substance layer 103 in the length direction of the electrode plate is less than or equal to 3 mm. In some embodiments, a length of an extension portion of the second active substance layer 103 that covers the insulation layer 104 in the length direction of the electrode plate is less than or equal to 3 mm.

In some embodiments, as shown in FIG. 2, an edge of the fifth end 103a of the second active substance layer 103 in the length direction of the electrode plate is flush with an edge of the third end 104b of the insulation layer 104 in the length direction of the electrode plate.

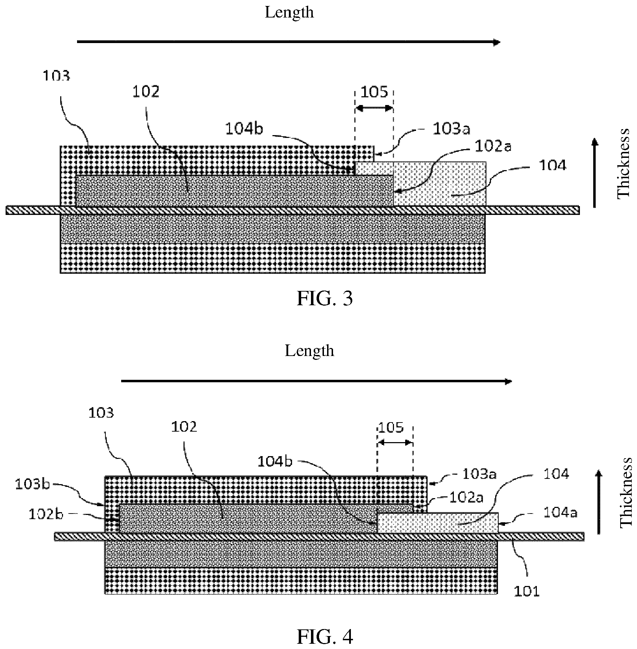

In some embodiments, as shown in FIG. 3, an edge of the fifth end 103a of the second active substance layer 103 in the length direction of the electrode plate is sandwiched between an edge of the first end 102a of the first active substance layer 102 in the length direction of the electrode plate and an edge of the third end 104b of the insulation layer 104 in the length direction of the electrode plate.

In some embodiments, the second active substance layer 103 completely covers all portions of the first active substance layer 102 except the overlapped portion 105. Taking a lithium-ion battery for example, if a portion of the first active substance layer 102 other than the overlapped portion 105 is exposed, after lithium ions are released from the exposed portion, because there is no active substance for the lithium ions to embed into a corresponding electrode plate of the other polarity, the released lithium ions form lithium metal particles on an opposite current collector of the other polarity (for example, the negative electrode current collector), and such situation worsens with the increase in cycles of the lithium-ion battery, thereby resulting in lithium metal particle bulges on the surface of the negative electrode plate and reducing capacity of the lithium-ion battery (the electrochemical apparatus).

In some embodiments, a length of the second active substance layer 103 is greater than a length of all portions of the first active substance layer 102 except the overlapped portion 105 in the length direction of the electrode plate. In some embodiments, the length of the second active substance layer 103 minus the length of all portions of the first active substance layer 102 except the overlapped portion 105 is less than or equal to 4 mm.

FIG. 4 to FIG. 6 are schematic structural diagrams of electrode plates according to some embodiments of this application. In the overlapped portion of the electrode plate, the insulation layer covers the first active substance layer. As shown in FIG. 4 to FIG. 6, the third end 104b is sandwiched between the first end 102a and the current collector 101 in a thickness direction of the electrode plate. As shown in FIG. 4, the second active substance layer 103 may extend from the overlapped portion 105 in the length direction of the electrode plate and cover a portion of the insulation layer 104, so that an edge of the first end 102a of the first active substance layer 102 in the length direction of the electrode plate is sandwiched between an edge of the third end 104b in the length direction of the electrode plate and an edge of the fifth end 103a in the length direction of the electrode plate. Because the insulation layer 104 has a better insulation effect than the first active substance layer 102, when penetrated by a nail or impacted by a heavy object, the insulation layer 104 covered with the first active substance layer 102 in the overlapped portion 105 of the electrode plate shown in FIG. 4 can better insulate and isolate the current collector 101, thereby implementing higher safety performance. In addition, because the fifth end 103a of the second active substance layer 103 covers an end portion of the first end 102a of the first active substance layer 102, the first end 102a is not easy to fall off under a destructive external force from nail penetration or impact, so that the current collector 101 is not exposed, better protecting safety of the electrode assembly of the current collector.

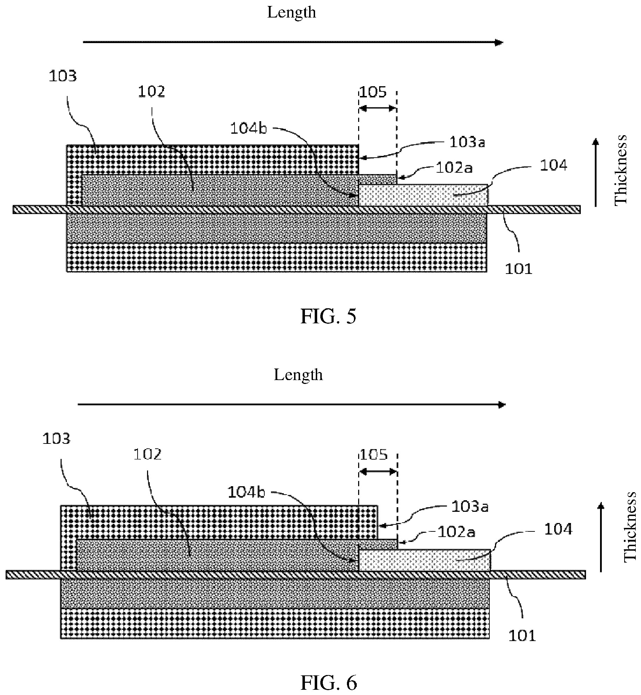

In some embodiments, as shown in FIG. 5, an edge of the fifth end 103a of the second active substance layer 103 in the length direction of the electrode plate is flush with an edge of the third end 104b of the insulation layer 104 in the length direction of the electrode plate.

In some embodiments, as shown in FIG. 6, an edge of the fifth end 103a of the second active substance layer 103 in the length direction of the electrode plate is sandwiched between an edge of the first end 102a of the first active substance layer 102 in the length direction of the electrode plate and an edge of the third end 104b of the insulation layer 104 in the length direction of the electrode plate.

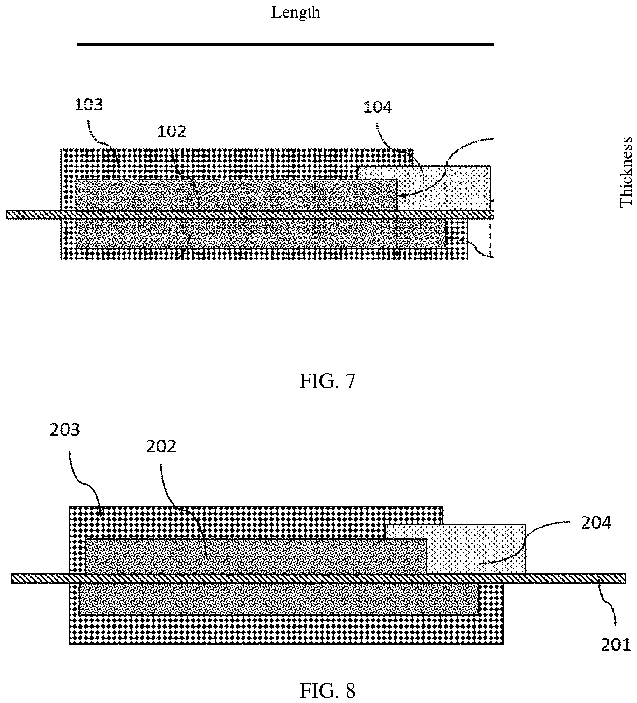

FIG. 7 is a schematic structural diagram of an electrode plate according to some other embodiments of this application. The electrode plate further includes a third active substance layer 106 and a fourth active substance layer 107, and the current collector 101 further includes a second surface. The third active substance layer 106 is sandwiched between the current collector 101 and the fourth active substance layer 107 and covers the second surface of the current collector. In some embodiments, the third active substance layer 106 has the same composition as the first active substance layer 102, the fourth active substance layer 107 has the same composition as the second active substance layer 103, and concentration of an active substance in the third active substance layer 106 is lower than concentration of an active substance in the fourth active substance layer 107.

As shown in FIG. 7, in some embodiments, the third active substance layer 106 includes a sixth end 106a in the length direction of the electrode plate, the sixth end 106a is close to the overlapped portion 105, and an edge of the sixth end 106a in the length direction of the electrode plate is located between an edge of the first end 102a in the length direction of the electrode plate and an edge of the fourth end 104a in the length direction of the electrode plate.

In some embodiments, the fourth active substance layer 107 includes a seventh end 107a in the length direction of the electrode plate, the seventh end 107a is close to the overlapped portion 105, and the seventh end 107a extends beyond the sixth end 106a in the length direction of the electrode plate.

It should be understood that, without departing from the spirit of this application, the insulation layer that forms the overlapped portion with the active substance layer may be arranged at either end of the electrode plate based on an actual need. For example, insulation layers are arranged at current collector uncoated portions at two ends of two surfaces of the positive electrode current collector (in the length direction of the positive electrode plate) that join the positive electrode active substance layer, or an insulation layer is arranged on one surface of the positive electrode current collector. This is not limited.

In some embodiments, a median particle size by volume of the first active substance ($D_v50$, a corresponding particle size when a cumulative volume percentage of particles reaches 50%) ranges from 0.2 $\mu$m to 15 $\mu$m; and a median particle size by volume of the first active substance ($D_v90$, a corresponding particle size when a cumulative volume percentage of particles reaches 90%) is less than or equal to 40 $\mu$m. When the first active substance has smaller $D_v90$, higher coverage and bonding can be implemented for the current collector 101. In some embodiments, a ratio of a median particle size ($D_v50$) of the second active substance to a median particle size ($D_v50$) of the first active substance ranges from 1:1 to 40:1. The smaller particles of the first active substance allow the first active substance layer to be thinner. The particle size of the active substance can be measured by using a Malvern particle size tester: The active substance is dispersed in a dispersant (ethanol or acetone, or another surfactant); and after sonication for 30 min, a sample is added into the Malvern particle size tester to start measurement.

In some embodiments, thickness of the first active substance layer 102 ranges from 0.1 $\mu$m to 20 $\mu$m. In some other embodiments, thickness of the first active substance layer 102 ranges from 0.5 $\mu$m to 15 $\mu$m. In some other embodiments, thickness of the first active substance layer 102 ranges from 2 $\mu$m to 8 $\mu$m. In particular, the thickness of the first active substance layer is not less than the particle size $D_v90$ of the first active substance to ensure the coverage of the first active substance layer.

In some embodiments, thickness of the insulation layer 104 is less than or equal to a sum of thickness of the first active substance layer 102 and thickness of the second active substance layer 103. In some embodiments, thickness of the insulation layer 104 is greater than 0.1 $\mu$m, to achieve a specified insulation effect. In some other embodiments, thickness of the insulation layer 104 ranges from 1 $\mu$m to 30 $\mu$m. In some other embodiments, thickness of the insulation layer 104 ranges from 5 $\mu$m to 15 $\mu$m.

In some embodiments, density of the insulation layer 104 in the overlapped portion 105 is 60% to 90% of density of the insulation layer outside the overlapped portion. In some embodiments, a length of the first active substance layer at the overlapped portion is less than a length of a non-overlapped portion, and density of the first active substance layer at the overlapped portion is similar to its density at the non-overlapped portion.

Based on some embodiments of this application, the insulation layer includes inorganic particles and/or polymers, and an appropriate dispersant may also be added. The dispersant includes but is not limited to ethanol, acetone, or another surfactant. The inorganic particles are selected from a group consisting of aluminum oxide, silicon dioxide, magnesium oxide, titanium oxide, hafnium oxide, tin oxide, ceria oxide, nickel oxide, zinc oxide, calcium oxide, zirconium dioxide, yttrium oxide, silicon carbide, boehmite, aluminum hydroxide, magnesium hydroxide, calcium hydroxide, barium sulfate, and a combination thereof. The polymer is selected from a group consisting of vinylidene fluoride homopolymer, vinylidene fluoride copolymer, hexafluoropropylene copolymer, polystyrene, polyphenylacetylene, polyvinyl sodium, polyvinyl potassium, polymethyl methacrylate, polyethylene, polypropylene, polytetrafluoroethylene, and a combination thereof.

In some embodiments, the electrode plate is a positive electrode plate, where the first active substance and the second active substance are each independently selected from a group consisting of lithium cobalt oxide, lithium iron phosphate, lithium manganese iron phosphate, sodium iron phosphate, lithium vanadium phosphate, sodium vanadium phosphate, lithium vanadyl phosphate, sodium vanadyl phosphate, lithium vanadate, lithium manganate, lithium nickelate, lithium nickel manganese cobalt oxide, lithium-rich manganese-based material, nickel-cobalt lithium aluminate, lithium titanate, and a combination thereof.

In some embodiments, the electrode plate is a negative electrode plate, where the first active substance and the second active substance are each independently selected from a group consisting of artificial graphite, natural graphite, Meso-carbon Microbeads, soft carbon, hard carbon, silicon, silicon oxide, silicon-carbon composite, tin, tin alloy, titanoniobate, lithium titanate, and a combination thereof.

In some embodiments, the first active substance layer 102 and the second active substance layer 103 further includes a binder, and the binder includes but is not limited to a combination of one or more of polyvinylidene fluoride, vinylidene fluoride-hexafluoropropylene copolymer, polyamide, polyacrylonitrile, polyacrylic acid ester, polyacrylic acid, polyacrylate, sodium carboxymethylcellulose, polyvinylpyrrolidone, polyvinyl ether, polymethyl methacrylate, polytetrafluoroethylene, polyhexafluoropropylene, and styrene-butadiene rubber. On the one hand, the binder allows better bonding between the active substance layer and the current collector. On the other hand, with increase in concentration of the binder, compacted density of the first active substance layer 102 is lower. The concentration of the binder of the first active substance layer 102 is 1.5% to 6% based on total weight of the first active substance layer 102, and concentration of the binder of the second active substance layer 103 is 0.5% to 4% based on total weight of the second active substance layer 103.

In some embodiments, the first active substance layer 12 and the second active substance layer 13 may further contain a specified amount of conductive agent. The conductive agent includes but is not limited to the combination of one or more of carbon nanotube, conductive carbon black, acetylene black, graphene, Ketjen black, and carbon fiber. Concentration of the conductive agent in the first active substance layer is 0.5% to 5% based on the total weight of the first active substance layer, and concentration of the conductive agent in the second active substance layer is 0.5% to 5% based on the total weight of the second active substance layer.

In addition, the first active substance layer 102 or the second active substance layer 103 may be subjected to some other treatments, or the current collector 101 may be subjected to some treatments, such as a coarseness treatment and a heat treatment. A principle or effect of the treatments may be to enhance bonding to the current collector, which, although not described in detail in this application, is included within the scope of this application.

In some embodiments, the electrode plate is a positive electrode plate, and the positive electrode current collector can be aluminum foil or nickel foil; or the electrode plate is a negative electrode plate, and the negative electrode current collector can be copper foil or nickel foil. However, another positive electrode current collector and negative electrode current collector commonly used in the field may be used.

It should be understood that, without departing from the spirit of this application, a method for preparing an electrode plate in this application may be any appropriate preparation method in the art, but is not limited thereto.

Some embodiments of this application further provide an electrochemical apparatus, including a positive electrode plate, a separator, and a negative electrode plate, where at least one of the positive electrode plate and the negative electrode plate is the electrode plate in the foregoing embodiments.

In some embodiments, the separator includes but is not limited to at least one of polyethylene, polypropylene, polyethylene terephthalate, polyimide, and aramid. For example, polyethylene includes at least one component selected from high-density polyethylene, low-density polyethylene, and ultra-high-molecular-weight polyethylene. Particularly, polyethylene and polypropylene have a good effect on preventing short circuit and can improve the stability of a battery through a shutdown effect.

A surface of the separator may further include a porous layer. The porous layer is arranged on at least one surface of the separator and includes inorganic particles and a binder. The inorganic particles are selected from a combination of one or more of aluminum oxide ($Al_2O_3$), silicon oxide ($SiO_2$), magnesium oxide (MgO), titanium oxide ($TiO_2$), hafnium oxide ($HfO_2$), tin oxide ($SnO_2$), ceria oxide ($CeO_2$), nickel oxide (NiO), zinc oxide (ZnO), calcium oxide (CaO), zirconium oxide ($ZrO_2$), yttrium oxide ($Y_2O_3$), silicon carbide (SiC), boehmite, aluminum hydroxide, magnesium hydroxide, calcium hydroxide, and barium sulfate. The binder is selected from a combination of one or more of polyvinylidene fluoride, vinylidene fluoride-hexafluoropropylene copolymer, polyamide, polyacrylonitrile, polyacrylate, polyacrylic acid, polyacrylate, sodium carboxymethyl cellulose, polyvinylpyrrolidone, polyvinyl ether, polymethyl methacrylate, polytetrafluoroethylene, and polyhexafluoropropylene.

The porous layer can improve heat resistance, oxidation resistance, and electrolyte infiltration performance of the separator, and enhance bonding between the separator and a positive electrode plate or a negative electrode plate.

The electrochemical apparatus in this application further includes an electrolyte. The electrolyte may be one or more of a gel electrolyte, a solid electrolyte, and an electrolyte solution. The electrolyte solution includes a lithium salt and a non-aqueous solvent.

In some embodiments of this application, the lithium salt is selected from one or more of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, and lithium difluoroborate. For example, $LiPF_6$ is selected as the lithium salt because it can provide high ionic conductivity and improve the cycling performance.

The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

An instance of the linear carbonate compound is diethyl carbonate (DEC), dimethyl carbonate (DMC), dipropyl carbonate (DPC), methyl propyl carbonate (MPC), ethyl propyl carbonate (EPC), methyl ethyl carbonate (MEC), and a combination thereof. An instance of the cyclic carbonate compound is ethylene carbonate (EC), propylene carbonate (PC), butylene carbonate (BC), vinyl ethylene carbonate (VEC), propyl propionate (PP), and a combination thereof. An instance of the fluorocarbonate compound is fluoroethylene carbonate (FEC), 4,5-difluoro-1,3-dioxolan-2-one, 4,4-difluoro-1,3-dioxolan-2-one, 4,4,5-trifluoro-1,3-dioxolan-2-one, 4,4,5,5-tetrafluoro-1,3-dioxolan-2-one, 4-fluoro-5-methyl-1,3-dioxolan-2-one, 4-fluoro-4-methyl-1,3-dioxolan-2-one, 4,5-difluoro-4-methyl-1,3-dioxolan-2-one, 4,4,5-trifluoro-5-methyl-1,3-dioxolan-2-one, 4-trifluoromethyl ethylence carbonate, and a combination thereof.

An instance of the carboxylate compound is methyl acetate, ethyl acetate, n-propyl acetate, tert-butyl acetate, methyl propionate, ethyl propionate, propyl propionate, $\gamma$-butyrolactone, decanolide, valerolactone, mevalonolactone, caprolactone, methyl formate, and a combination thereof.

An instance of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, and a combination thereof.

An instance of the another organic solvent is dimethyl sulfoxide, 1,2-dioxolane, sulfolane, methyl-sulfolane, 1,3-dimethyl-2-imidazolidinone, N-methyl-2-pyrrolidone, methylamide, dimethylformamide, acetonitrile, trimethyl phosphate, triethyl phosphate, trioctyl phosphate, phosphate ester, and a combination thereof.

It should be understood that, without departing from the spirit of this application, a method for preparing an electrochemical apparatus in this application may be any appropriate preparation method in the art, but is not limited thereto. In some embodiments, the used method for preparing an electrochemical apparatus is as follows: The positive electrode plate, the separator, and the negative electrode plate are wound or stacked in sequence to form an electrode assembly, and the electrode assembly is then put into, for example, an aluminum-plastic film, followed by injection of an electrolyte solution, formation, and packaging, to prepare a lithium-ion battery.

Although some of the foregoing embodiments are described by using the lithium-ion battery as an example, after reading this application, a person skilled in the art should understand that, without departing from the spirit of this application, specific examples of the electrochemical apparatus in this application can include all types of primary or secondary batteries. Specially, the electrochemical apparatus is a lithium secondary battery, including a lithium metal secondary battery, a lithium-ion secondary battery, a lithium polymer secondary battery, or a lithium-ion polymer secondary battery.

Some embodiments of this application further provide an electronic apparatus, where the electronic apparatus includes the electrochemical apparatus in the embodiments of this application.

The electronic apparatus in the embodiments of this application is not particularly limited, and may be any known electronic apparatus used in the prior art. In some embodiments, the electronic apparatus may include but is not limited to an electronic cigarette, an electronic vapor device, a wireless headset, a robotic vacuum cleaner, an unmanned aerial vehicle, a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, a lithium-ion capacitor, and the like.

## Examples

Some specific examples and comparative examples are listed below, and battery capacity tests, battery nail penetration tests and heavy impact tests were carried out to better illustrate this application. A person skilled in the art understands that a preparation method described in this application is only an example embodiment, and that any other appropriate preparation method falls within the scope of this application.

### I. Test method

### 1.1. Battery capacity test

After formation, lithium-ion batteries (electrochemical apparatuses) were left standing for 30 min at 25°C $\pm$ 3°C, charged to a voltage of 4.4 V (rated voltage) at a constant current of 0.5C, and then constant-voltage charged until a current reached 0.05C, and the to-be-tested lithium-ion batteries were left standing for 30 min. Then the lithium-ion batteries were further discharged to 3.0 V at a current of 0.2C, and the to-be-tested lithium-ion batteries were left standing for 30 min. Finally, discharge capacity was used as actual battery capacity of the lithium-ion battery.

$$\text{Volumetric energy density of lithium-ion battery} = \text{actual battery capacity}/(\text{length} \times \text{width} \times \text{thickness of lithium-ion battery}).$$

### 1.2. Battery nail penetration test

After formation, 10 lithium-ion batteries were taken, charged to a voltage of 4.4 V at a constant current of 0.5C at normal temperature (25°C $\pm$ 3°C), and further charged to a current of 0.05C at a constant voltage of 4.4 V, so that the lithium-ion batteries were in a fully charged state of 4.4 V. Then the lithium-ion batteries were subjected to the nail penetration test under normal temperature. A nail with a diameter of 2.5 mm (steel nail, made of carbon steel, with a taper of 16.5 mm and a total length of 100 mm) was driven through the lithium-ion battery at a speed of 30 mm/s, with the taper of the steel nail penetrated the lithium-ion battery. If the lithium-ion battery did not gas, catch fire, or explode, the lithium-ion battery was considered to have passed the nail penetration test.

**1.3. Heavy impact test**

After formation, 10 lithium-ion batteries were taken, charged to a voltage of 4.4 V at a constant current of 0.5C at normal temperature (25°C ± 3°C), and further charged to a current of 0.05C at a constant voltage of 4.4 V, so that the lithium-ion batteries were in a fully charged state of 4.4 V. Then the lithium-ion batteries were subjected to the heavy impact test under normal temperature. An impact member with a diameter of 15.8 mm (bar, with a total weight of 9.1 kg) was dropped vertically from 61 cm above the lithium-ion battery to strike the lithium-ion battery. If the lithium-ion battery did not gas, catch fire, or explode, the lithium-ion battery was considered to have passed the heavy impact test.

Example 1

Aluminum foil was used as the positive electrode current collector, a layer of first positive electrode active substance layer slurry, containing a first positive electrode active substance (a particle size of lithium iron phosphate was 3 μm at $D_v50$ and 10 μm at $D_v90$), was uniformly applied on a surface of the aluminum foil. The first positive electrode active substance layer slurry containing 95.8wt% of lithium iron phosphate, 2.8wt% of polyvinylidene fluoride, and 1.4wt% of conductive carbon black was dried at 85°C to form the first positive electrode active substance layer. A layer of insulation layer slurry was applied on a portion on the first positive electrode active substance layer and a current collector uncoated portion with an end in the length direction of the positive electrode plate joining the first positive electrode active substance layer. The insulation layer slurry containing 98wt% of alumina and 2wt% of polyvinylidene fluoride was dried at 85°C to form an insulation layer with a thickness of 10 μm, where a length of an overlapped portion formed by covering the first positive electrode active substance layer with the insulation layer in the length direction of the positive electrode plate was 2 mm. Then a layer of second positive electrode active substance layer slurry was applied on the dried first positive electrode active substance layer, where the second positive electrode active substance layer slurry contained 97.8 wt% of lithium cobalt oxide (a particle size of lithium cobalt oxide was 13 μm at $D_v50$ and 38 μm at $D_v90$), 0.8wt% of polyvinylidene fluoride, and 1.4wt% of conductive carbon black, and was dried at 85°C to form the second positive electrode active substance layer. An edge of a fifth end of the second positive electrode active substance layer was located on a non-overlapped portion of the insulation layer (that is, the edge of the fifth end extended beyond an edge of a first end of the first positive electrode active substance layer) in the length direction of the positive electrode plate, and a length of the second positive electrode active substance layer that extended beyond the overlapped portion was 1 mm. A third positive electrode active substance layer and a fourth positive electrode active substance layer were prepared on another surface of the positive electrode current collector according to FIG. 8. The third positive electrode active substance layer had the same composition as the first active substance layer, and the second positive electrode active substance layer had the same composition as the fourth positive electrode active substance. Then the positive electrode plate was cold-pressed, where cold-pressing pressure was 60T and cold-pressing speed was 40 m/min. After cutting and slitting, the positive electrode plate was dried at 85°C in vacuum for 4 hours, to prepare the positive electrode plate. The first positive electrode active substance layer and the third active substance layer were 8 μm thick, the insulation layer was 10 μm thick, and the second positive electrode active substance layer and the fourth active substance layer were 50 μm thick. FIG. 8 is a schematic structural diagram of a positive electrode plate in Example 1. For an arrangement relationship between the positive electrode current collector 201, the first positive electrode active substance layer 202, the second positive electrode active substance layer 203, and the insulation layer 204 in the positive electrode plate in Example 1, refer to FIG. 8.

Copper foil was used as the negative electrode current collector, a layer of graphite slurry was uniformly applied on a surface of the copper foil. The slurry containing 97.7wt% of artificial graphite, 1.3wt% of sodium carboxymethyl cellulose, and 1.0wt% of styrene-butadiene rubber was dried at 85°C, and then cold-pressed, cut, and slit to prepare a negative electrode plate.

Lithium salt $LiPF_6$ and non-aqueous organic solvents (a mass ratio of ethylene carbonate to diethyl carbonate to propylene carbonate to propyl propionate to vinylene carbonate = 20:30:20:28:2) were mixed at a mass ratio of 8:92, and a resulting solution was used as an electrolyte of lithium-ion batteries.

The positive electrode plate and the negative electrode plate were wound, and a polyethylene separator was arranged between the positive electrode plate and the negative electrode plate for separation to prepare a wound electrode assembly, the electrode assembly was then put into a housing, and the electrolyte solution was injected. The finished product of lithium-ion battery could be obtained after treatments such as vacuum packaging, standing, formation, and shaping.

Examples 2 to 6

A preparation method was the same as that in Example 1, except that an overlapped portion of a first positive electrode active substance layer and an insulation layer in Examples 2 to 6 had a different length in a length direction of a positive electrode plate. For details, refer to Table 1.

Example 7

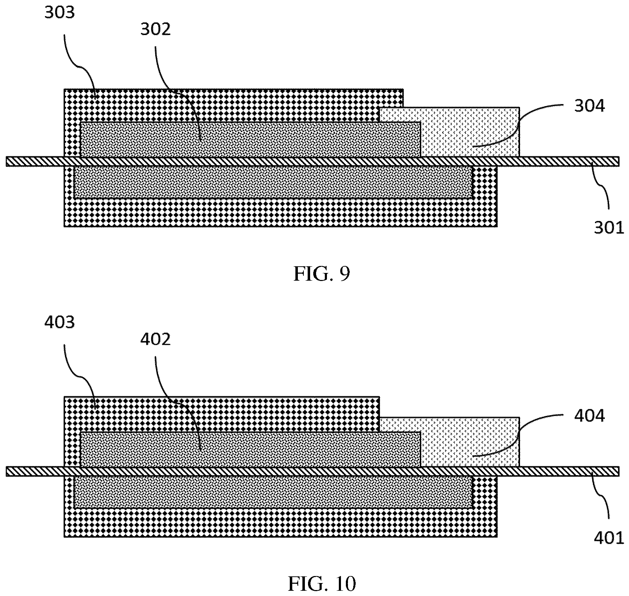

A preparation method was the same as that in Example 1, except that in Example 7, an edge of a fifth end of a second positive electrode active substance layer was located on an overlapped portion (that is, between an edge of a first end of a first positive electrode active substance layer and an edge of a third end of an insulation layer) in a length direction of a positive electrode plate, and a length of the second positive electrode active substance layer that covered the overlapped portion was 1 mm. FIG. 9 is a schematic structural diagram of a positive electrode plate in Example 7. For an arrangement relationship between the positive electrode current collector 301, the first positive electrode active substance layer 302, the second positive electrode active substance layer 303, and the insulation layer 304 in the positive electrode plate in Example 7, refer to FIG. 9.

Example 8

A preparation method was the same as that in Example 1, except that in Example 8, an edge of a fifth end of a second positive electrode active substance layer was flush with an edge of a third end of an insulation layer (that is, the second positive electrode active substance layer abutted an overlapped portion) in a length direction of a positive electrode plate, and a distance between the second positive electrode active substance layer and the overlapped portion was 0 mm. FIG. 10 is a schematic structural diagram of a positive electrode plate in Example 8. For an arrangement relationship between the positive electrode current collector 401, the first positive electrode active substance layer 402, the second positive electrode active substance layer 403, and the insulation layer 404 in the positive electrode plate in Example 8, refer to FIG. 10.

Example 9

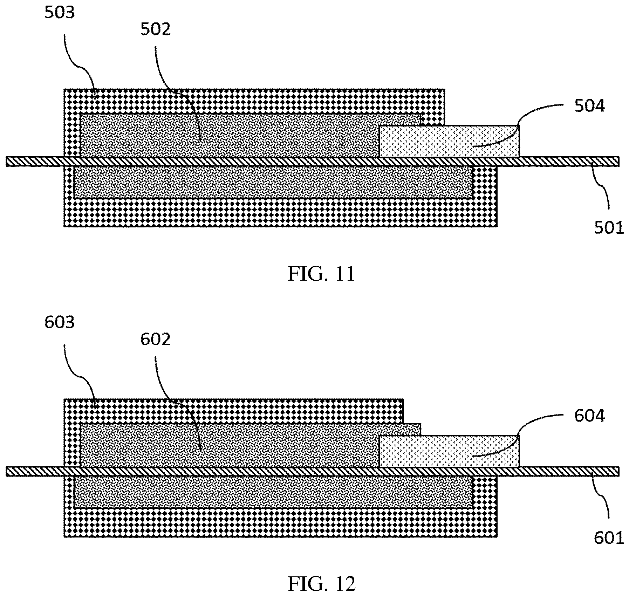

A preparation method was the same as that in Example 1, except that in Example 9, a layer of insulation layer slurry was first uniformly applied on a surface of aluminum foil; and then a layer of first positive electrode active substance layer slurry was applied on a portion on the insulation layer and a current collector uncoated portion with an end in a length direction of a positive electrode plate joining the insulation layer, where a length of an overlapped portion formed by covering the insulation layer with the first positive electrode active substance layer in the length direction of the positive electrode plate was 2 mm, thickness of the first positive electrode active substance layer was 10 $\mu$m, and thickness of the insulation layer was 8 $\mu$m. FIG. 11 is a schematic structural diagram of a positive electrode plate in Example 9. For an arrangement relationship between the positive electrode current collector 501, the first positive electrode active substance layer 502, the second positive electrode active substance layer 503, and the insulation layer 504 in the positive electrode plate in Example 9, refer to FIG. 11.

Example 10

A preparation method was the same as that in Example 9, except that in Example 10, a length of a second positive electrode active substance layer that extended beyond an overlapped portion in a length direction of a positive electrode plate was 3 mm.

Example 11

A preparation method was the same as that in Example 9, except that in Example 11, an edge of a fifth end of a second positive electrode active substance layer was located on an overlapped portion (that is, between an edge of a first end of a first positive electrode active substance layer and an edge of a third end of an insulation layer) in a length direction of a positive electrode plate, and a length of the second positive electrode active substance layer that covered the overlapped portion was 1 mm. FIG. 12 is a schematic structural diagram of a positive electrode plate in Example 11. For an arrangement relationship between the positive electrode current collector 601, the first positive electrode active substance layer 602, the second positive electrode active substance layer 603, and the insulation layer 604 in the positive electrode plate in Example 11, refer to FIG. 12.

Example 12

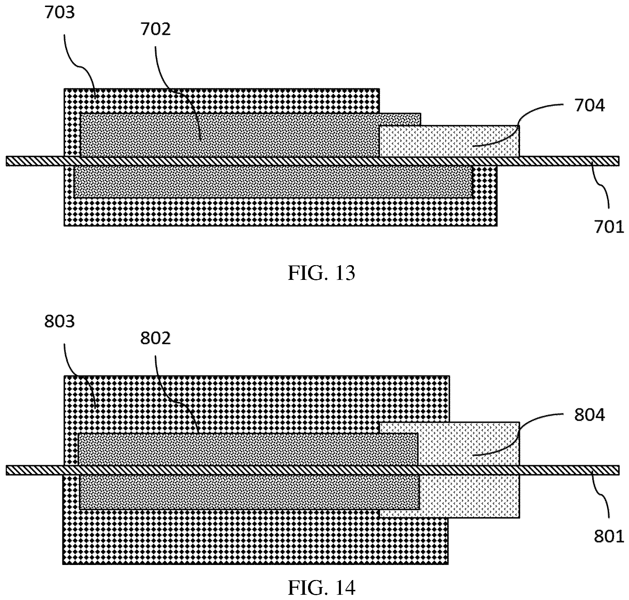

A preparation method was the same as that in Example 9, except that in Example 12, an edge of a fifth end of a second positive electrode active substance layer was flush with an edge of a third end of an insulation layer (that is, the second positive electrode active substance layer abutted an overlapped portion) in a length direction of a positive electrode plate, and a distance between the second positive electrode active substance layer and the overlapped portion was 0 mm. FIG. 13 is a schematic structural diagram of a positive electrode plate in Example 12. For an arrangement relationship between the positive electrode current collector 701, the first positive electrode active substance layer 702, the second positive electrode active substance layer 703, and the insulation layer 704 in the positive electrode plate in Example 12, refer to FIG. 13.

Example 13

A preparation method was the same as that in Example 1, except that in Example 13, an insulation layer structure similar to that in Example 1 was provided on a surface on each side of a positive electrode current collector. FIG. 14 is a schematic structural diagram of a positive electrode plate in Example 13. For an arrangement relationship between the positive electrode current collector 801, the first positive electrode active substance layer 802, the second positive electrode active substance layer 803, and the insulation layer 804 in the positive electrode plate in Example 13, refer to FIG. 14.

Comparative Example 1

A preparation method was the same as that in Example 1, except that in Comparative Example 1, an insulation layer slurry was applied at a location at an end that was 3 mm away from a first positive electrode active substance layer in a length direction of a positive electrode plate, where a distance between a third end of a formed insulation layer and a first end of the first positive electrode active substance layer was 3 mm; and then a layer of second positive electrode active substance layer slurry was applied on the dried first positive electrode active substance layer and a part of a current collector uncoated portion separating the first positive electrode active substance layer from the insulation layer, and then dried to form the second positive electrode active substance layer, where in the length direction of the positive electrode plate, an edge of a fifth end of the second positive electrode active substance layer was located on the current collector uncoated portion separating the first positive electrode active substance layer from the insulation layer, and a distance between the edge of the fifth end and the insulation layer was 2 mm.

After finished products of lithium-ion battery in the foregoing examples and comparative examples were completed, capacity, thickness, width, and length of the finished products were recorded to determine volumetric energy density of the lithium-ion batteries. Then the finished products of lithium-ion battery in the foregoing examples and comparative examples were subjected to battery capacity tests, battery nail penetration tests, and heavy impact tests.

Test parameters and measurement results of the examples and comparative examples are shown in Table 1 below.

Table 1

| Group | Length (mm) of overlapped portion | Location relationship between insulation layer and first_ active substance layer | Location relationship between insulation layer and second active substance layer | Nail penetration test pass rate | Heavy impact test pass rate | Energy density (Wh/L) of lithium-ion battery |
|---|---|---|---|---|---|---|
| Example 1 | 2 | Insulation layer covering first active substance layer | Edge of fifth end being 1 mm beyond overlapped portion | 10/10 | 7/10 | 690 |

(continued)

| Group | Length (mm) of overlapped portion | Location relationship between insulation layer and first_ active substance layer | Location relationship between insulation layer and second active substance layer | Nail penetration test pass rate | Heavy impact test pass rate | Energy density (Wh/L)of lithium-ion battery |
|---|---|---|---|---|---|---|
| Example 2 | 5 | Insulation layer covering first active substance layer | Edge of fifth end being 1 mm beyond overlapped portion | 10/10 | 7/10 | 687 |
| Example 3 | 10 | Insulation layer covering first active substance layer | Edge of fifth end being 1 mm beyond overlapped portion | 10/10 | 8/10 | 685 |
| Example 4 | 15 | Insulation layer covering first active substance layer | Edge of fifth end being 1 mm beyond overlapped portion | 10/10 | 9110 | 683 |
| Example 5 | 20 | Insulation layer covering first active substance layer | Edge of fifth end being 1 mm beyond overlapped portion | 10/10 | 9110 | 680 |
| Example 6 | 23 | Insulation layer covering first active substance layer | Edge of fifth end being 1 mm beyond overlapped portion | 10/10 | 9110 | 675 |
| Example 7 | 2 | Insulation layer covering first active substance layer | Edge of fifth end being above overlapped portion | 10/10 | 8/10 | 690 |
| Example 8 | 2 | Insulation layer covering first active substance layer | Edge of fifth end being flush with edge of third end | 10/10 | 6/10 | 688 |
| Example 9 | 2 | First active substance layer covering insulation layer | Edge of fifth end being 1 mm beyond overlapped portion | 10/10 | 9110 | 690 |
| Example 10 | 2 | First active substance layer covering insulation layer | Edge of fifth end being 3 mm beyond overlapped portion | 10/10 | 10/10 | 690 |

(continued)

| Group | Length (mm) of overlapped portion | Location relationship between insulation layer and first_ active substance layer | Location relationship between insulation layer and second active substance layer | Nail penetration test pass rate | Heavy impact test pass rate | Energy density (Wh/L)of lithium-ion battery |
|---|---|---|---|---|---|---|
| Example 11 | 2 | First active substance layer covering insulation layer | Edge of fifth end being above overlapped portion | 10/10 | 8/10 | 690 |
| Example 12 | 2 | First active substance layer covering insulation layer | Edge of fifth end being flush with edge of third end | 10/10 | 7/10 | 687 |
| Example 13 | 2 | Insulation layer covering first active substance layer, and identical insulation layer structures being provided on two sides of positive electrode current collector | Edge of fifth end being 1 mm beyond overlapped portion | 10/10 | 8/10 | 663 |
| Comparative Example 1 | - | Insulation layer being 3 mm away from first active substance layer | Edge of fifth end being 2 mm away from insulation layer | 9110 | 2/10 | 686 |

As shown in Table 1 above, in the electrode plate in this application, the overlapped portion arranged by stacking the first active substance layer and the insulation layer could effectively increase the nail penetration test pass rate and the heavy impact test pass rate, thereby improving safety performance of the electrochemical apparatus without compromising the energy density of the electrochemical apparatus.

According to comparison between Comparative Example 1 and Example 1, when a gap was present between the insulation layer and the first active substance layer, the heavy impact test pass rate of the lithium-ion batteries was reduced greatly, and the nail penetration test pass rate of the lithium-ion batteries was reduced slightly. For example, the lithium-ion battery in Comparative Example 1 had a positive electrode current collector that was not protected by a high-resistance layer between the insulation layer and the first positive electrode active substance layer, and the positive electrode current collector easily came into contact with the negative electrode active substance layer when impacted by a heavy object, thereby causing short circuit in the lithium-ion battery.

According to comparison between Examples 1 to 6, as the overlapped portion of the insulation layer and the first active substance layer became larger, the heavy impact test pass rate of the lithium-ion batteries increased. However, the larger overlapped portion also resulted in decreased energy density of the lithium-ion batteries.

According to comparison between Example 1, Example 7, and Example 8, an arrangement relationship between the second active substance layer, the first active substance layer, and the insulation layer affected the heavy impact test pass rate of the lithium-ion batteries. When the second active substance layer extended and covered the overlapped portion and/or extended beyond the overlapped portion, the heavy impact test pass rate of the lithium-ion batteries was high. In addition, when the second active substance layer extended and covered the overlapped portion or the insulation layer, the energy density of the lithium-ion battery could be increased slightly.

According to comparison between Example 1 and Example 9, when the first positive electrode active substance layer covered the insulation layer in the overlapped portion, a higher heavy impact test pass rate could be implemented. In addition, according to comparison between Examples 9 to 12, when the fifth end of the second positive electrode active substance layer covered the end portion of the first end of the first positive electrode active substance layer, the first end 102a is not easy to fall off, thereby implementing a higher nail penetration test pass rate and a higher heavy impact test pass rate.

Through comparison between the foregoing examples, it can be clearly understood that the electrode plate in this application can effectively improve the safety performance of the electrochemical apparatus and reduce the impact on the energy density.

References to "some embodiments", "some of the embodiments", "an embodiment", "another example", "examples", "specific examples", or "some examples" in this specification mean the inclusion of specific features, structures, materials, or characteristics described in at least one embodiment or example of this application in this embodiment or example. Therefore, descriptions in various places throughout this specification, such as "in some embodiments", "in the embodiments", "in an embodiment", "in another example", "in an example", "in a specific example", or "examples" do not necessarily refer to the same embodiment or example in this application. In addition, a specific feature, structure, material, or characteristic herein may be combined in any appropriate manner in one or more embodiments or examples.

Although illustrative embodiments have been demonstrated and described, a person skilled in the art should understand that the foregoing embodiments are not to be construed as limiting this application, and that the embodiments may be changed, replaced, and modified without departing from the spirit, principle, and scope of this application.

**Claims**

1. An electrode plate, **characterized by** comprising:

   a current collector, comprising a first surface;
   a first active substance layer, comprising a first active substance;
   a second active substance layer, comprising a second active substance; and
   an insulation layer;
   wherein the first active substance layer is sandwiched between the current collector and the second active substance layer and covers a first portion of a first surface of the current collector, the insulation layer covers a second portion of the first surface of the current collector that is different from the first portion, and in a length direction of the electrode plate, the first active substance layer comprises a first end and a second end, the insulation layer comprises a third end and a fourth end, and the first end and the third end are stacked to form an overlapped portion.

2. The electrode plate according to claim 1, wherein a distance in the length direction of the electrode plate between an edge of the first end in the length direction of the electrode plate and an edge of the third end in the length direction of the electrode plate is less than or equal to 20 mm.

3. The electrode plate according to claim 1, wherein the first end is sandwiched between the third end and the current collector in a thickness direction of the electrode plate.

4. The electrode plate according to claim 1, wherein the third end is sandwiched between the first end and the current collector in a thickness direction of the electrode plate.

5. The electrode plate according to claims 1 to 4, wherein the second active substance layer comprises a fifth end in the length direction of the electrode plate.

6. The electrode plate according to claim 5, wherein an edge of the fifth end in the length direction of the electrode plate is flush with an edge of the third end in the length direction of the electrode plate.

7. The electrode plate according to claim 5, wherein an edge of the fifth end in the length direction of the electrode plate is sandwiched between an edge of the first end in the length direction of the electrode plate and an edge of the third end in the length direction of the electrode plate.

8. The electrode plate according to claim 5, wherein an edge of the first end in the length direction of the electrode plate is sandwiched between an edge of the third end in the length direction of the electrode plate and an edge of the fifth end in the length direction of the electrode plate.

9. The electrode plate according to claim 8, wherein a distance in the length direction of the electrode plate between an edge of the first end in the length direction of the electrode plate and the edge of the fifth end in the length direction of the electrode plate is less than or equal to 3 mm.

10. The electrode plate according to claim 1, wherein the electrode plate further comprises a third active substance layer and a fourth active substance layer, the current collector further comprises a second surface, and the third active substance layer is sandwiched between the current collector and the fourth active substance layer and covers the second surface of the current collector.

11. The electrode plate according to claim 10, wherein the third active substance layer comprises a sixth end in the length direction of the electrode plate, and an edge of the sixth end in the length direction of the electrode plate is sandwiched between an edge of the first end in the length direction of the electrode plate and an edge of the fourth end in the length direction of the electrode plate.

12. The electrode plate according to claim 11, wherein the fourth active substance layer comprises a seventh end in the length direction of the electrode plate, and the seventh end extends beyond the sixth end in the length direction of the electrode plate.

13. The electrode plate according to claim 1, wherein density of the insulation layer in the overlapped portion is 60% to 90% of density of the insulation layer outside the overlapped portion.

14. The electrode plate according to claim 1, wherein the first active substance and the second active substance are each independently selected from a group consisting of lithium cobalt oxide, lithium iron phosphate, lithium manganese iron phosphate, sodium iron phosphate, lithium vanadium phosphate, sodium vanadium phosphate, lithium vanadyl phosphate, sodium vanadyl phosphate, lithium vanadate, lithium manganate, lithium nickelate, lithium nickel manganese cobalt oxide, lithium-rich manganese-based material, nickel-cobalt lithium aluminate, lithium titanate, and a combination thereof.

15. The electrode plate according to claim 1, wherein the first active substance and the second active substance are each independently selected from a group consisting of artificial graphite, natural graphite, Meso-carbon Microbeads, soft carbon, hard carbon, silicon, silicon oxide, silicon-carbon composite, tin, tin alloy, titanoniobate, lithium titanate, and a combination thereof.

16. The electrode plate according to claim 1, wherein the first active substance layer and the second active substance layer both further comprise a binder and a conductive agent, wherein the binder is selected from a group consisting of polyvinylidene fluoride, vinylidene fluoride-hexafluoropropylene copolymer, polyamide, polyacrylonitrile, polyacrylic acid ester, polyacrylic acid, polyacrylate, sodium carboxymethylcellulose, polyvinylpyrrolidone, polyvinyl ether, polymethyl methacrylate, polytetrafluoroethylene, polyhexafluoropropylene, styrene-butadiene rubber, and a combination thereof; and
the conductive agent is selected from a group consisting of carbon nanotube, conductive carbon black, acetylene black, graphene, Ketjen black, carbon fiber, and a combination thereof.

17. The electrode plate according to claim 1, wherein the insulation layer comprises inorganic particles and/or a polymer, wherein the inorganic particles are selected from a group consisting of aluminum oxide, silicon dioxide, magnesium oxide, titanium oxide, hafnium oxide, tin oxide, ceria oxide, nickel oxide, zinc oxide, calcium oxide, zirconium dioxide, yttrium oxide, silicon carbide, boehmite, aluminum hydroxide, magnesium hydroxide, calcium hydroxide, barium sulfate, and a combination thereof; and
the polymer is selected from a group consisting of vinylidene fluoride homopolymer, vinylidene fluoride copolymer, hexafluoropropylene copolymer, polystyrene, polyphenylacetylene, polyvinyl sodium, polyvinyl potassium, polymethyl methacrylate, polyethylene, polypropylene, polytetrafluoroethylene, and a combination thereof.

18. An electrochemical apparatus, comprising a positive electrode plate, a separator, and a negative electrode plate, wherein the positive electrode plate and/or the negative electrode plate is the electrode plate according to claims 1 to 17.

19. An electronic apparatus, comprising the electrochemical apparatus according to claim 18.

Length

FIG. 1

Length

FIG. 2

Length

103
102
104b
105
103a
102a
104
Thickness

FIG. 3

Length

103
102
104b
105
103a
104
103b
102a
102b
104a
101
Thickness

FIG. 4

Length

FIG. 5

Length

FIG. 6

Length

103    104

102

FIG. 7

203

202

204

201

FIG. 8

303

302

304

301

FIG. 9

403

402

404

401

FIG. 10

503

502

504

501

FIG. 11

603

602

604

601

FIG. 12

703

702

704

701

FIG. 13

803

802

804

801

FIG. 14

## INTERNATIONAL SEARCH REPORT

| International application No. |
| --- |
| **PCT/CN2020/082932** |

**A. CLASSIFICATION OF SUBJECT MATTER**

H01M 4/13(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; 电极, 活性, 层, 覆盖, 重叠, 绝缘, 边缘, electrode, active, layer, cover, overlap, insulate, edge

**C. DOCUMENTS CONSIDERED TO BE RELEVANT**

| Category* | Citation of document, with indication, where appropriate, of the relevant passages | Relevant to claim No. |
| --- | --- | --- |
| X | CN 105794022 A (NEC ENERGY DEVICES LTD.) 20 July 2016 (2016-07-20) description paragraphs 11-73, figures 1A-10 | 1-3, 5-19 |
| Y | CN 105794022 A (NEC ENERGY DEVICES LTD.) 20 July 2016 (2016-07-20) description paragraphs 11-73, figures 1A-10 | 4, 14-17 |
| Y | CN 102468475 A (GS YUASA INTERNATIONAL LTD.) 23 May 2012 (2012-05-23) description, paragraphs 13-183, and figures 1-6 | 4, 14-17 |
| Y | CN 1525591 A (SANYO ELECTRIC CO., LTD.) 01 September 2004 (2004-09-01) description, page 4 line 16 - page 9 line 17, figures 1-5 | 4, 17 |
| A | CN 105742715 A (AUTOMOTIVE ENERGY SUPPLY CORP.) 06 July 2016 (2016-07-06) entire document | 1-19 |
| A | CN 109088091 A (AUTOMOTIVE ENERGY SUPPLY CORP.) 25 December 2018 (2018-12-25) entire document | 1-19 |
| A | WO 2017163846 A1 (NEC ENERGY DEVICES LTD.) 28 September 2017 (2017-09-28) entire document | 1-19 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 December 2020** | **06 January 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/082932**

**C.    DOCUMENTS CONSIDERED TO BE RELEVANT**

| Category* | Citation of document, with indication, where appropriate, of the relevant passages | Relevant to claim No. |
|---|---|---|
| A | CN 109244362 A (NINGDE AMPEREX TECHNOLOGY LTD.) 18 January 2019 (2019-01-18)<br>    entire document | 1-19 |

Form PCT/ISA/210 (second sheet) (January 2015)

**INTERNATIONAL SEARCH REPORT**
Information on patent family members

International application No.

**PCT/CN2020/082932**

| Patent document cited in search report | | | Publication date (day/month/year) | Patent family member(s) | | | Publication date (day/month/year) |
|---|---|---|---|---|---|---|---|
| CN | 105794022 | A | 20 July 2016 | US | 2016294015 | A1 | 06 October 2016 |
| | | | | JP | WO2015087657 | A1 | 16 March 2017 |
| | | | | CN | 105794022 | B | 17 July 2018 |
| | | | | JP | 6521323 | B2 | 29 May 2019 |
| | | | | WO | 2015087657 | A1 | 18 June 2015 |
| CN | 102468475 | A | 23 May 2012 | EP | 2450989 | A2 | 09 May 2012 |
| | | | | CN | 102468475 | B | 04 May 2016 |
| | | | | JP | 2012114079 | A | 14 June 2012 |
| | | | | US | 8986891 | B2 | 24 March 2015 |
| | | | | JP | 5818150 | B2 | 18 November 2015 |
| | | | | KR | 20120048508 | A | 15 May 2012 |
| | | | | US | 2015132659 | A1 | 14 May 2015 |
| | | | | KR | 101818627 | B1 | 15 January 2018 |
| | | | | EP | 2450989 | B1 | 29 November 2017 |
| | | | | US | 9450236 | B2 | 20 September 2016 |
| | | | | US | 2012115030 | A1 | 10 May 2012 |
| | | | | US | 8956763 | B2 | 17 February 2015 |
| CN | 1525591 | A | 01 September 2004 | KR | 20040076831 | A | 03 September 2004 |
| | | | | US | 7258948 | B2 | 21 August 2007 |
| | | | | TW | I233709 | B | 01 June 2005 |
| | | | | JP | 4201619 | B2 | 24 December 2008 |
| | | | | JP | 2004259625 | A | 16 September 2004 |
| | | | | TW | 200421651 | A | 16 October 2004 |
| | | | | CN | 100401573 | C | 09 July 2008 |
| | | | | US | 2004202928 | A1 | 14 October 2004 |
| CN | 105742715 | A | 06 July 2016 | KR | 20160079698 | A | 06 July 2016 |
| | | | | US | 2016190539 | A1 | 30 June 2016 |
| | | | | JP | 2016126889 | A | 11 July 2016 |
| CN | 109088091 | A | 25 December 2018 | US | 2018366786 | A1 | 20 December 2018 |
| | | | | JP | 2019003789 | A | 10 January 2019 |
| | | | | US | 10505231 | B2 | 10 December 2019 |
| | | | | EP | 3416215 | A1 | 19 December 2018 |
| WO | 2017163846 | A1 | 28 September 2017 | JP | WO2017163846 | A1 | 07 February 2019 |
| CN | 109244362 | A | 18 January 2019 | US | 2020144605 | A1 | 07 May 2020 |
| | | | | EP | 3648204 | A1 | 06 May 2020 |
| | | | | CN | 209045678 | U | 28 June 2019 |

Form PCT/ISA/210 (patent family annex) (January 2015)